# EUROPÄISCHE PATENTSCHRIFT

(11) **EP 0 901 883 B1**
(45) Veröffentlichungstag und Bekanntmachung des Hinweises auf die Patenterteilung: **24.10.2001**
(21) Anmeldenummer: 98115783.7
(22) Anmeldetag: 21.08.1998
(51) Int. Cl.: B25B 1/24

(54) **Spannvorrichtung, insbesondere Maschinenschraubstock**
Chucking device, especially machine vice
Dispositif de fixation, en particulier étau de machines

(30) Priorität: 08.09.1997 DE 29716104 U
(43) Veröffentlichungstag der Anmeldung: 17.03.1999
(73) Patentinhaber: Gressel AG, CH-8255 Aadorf (CH)
(72) Erfinder: Würthele, Adolf, 8357 Guntershausen (CH)
(74) Vertreter: Rapp, Bertram

(56) Entgegenhaltungen:
- DE-A- 3 925 718
- US-A- 5 442 844
- US-A- 5 634 253

## Beschreibung

Die Erfindung betrifft eine Spannvorrichtung, insbesondere Maschinenschraubstock, mit einem Grundkörper, der einen im wesentlichen U-förmigen Querschnitt und am oberen Ende seiner nach oben ragender U-Schenkel je eine Auflagefläche für ein Werkstück aufweist, mit mindestens einem im Grundkörper verschiebbaren Schlitten, der mittels einer Schraubspindel verschiebbar ist und der an seiner Oberseite mehrere in Schlittenlängsrichtung mit gegenseitigem Mittenabstand angeordnete Fixierausnehmungen zum wahlweisen Eingriff von einem entsprechenden Fixiervorsprung jeweils einer umsetzbaren Spannbacke und mehrere Gewindebohrungen für Befestigungsschrauben der Spannbacke aufweist, wobei die Oberseite des Schlittens gegenüber den Auflageflächen des Grundkörpers nach unten versetzt angeordnet ist (siehe DE 39 25 718 A1).

Bei einer derartigen bekannten Spannvorrichtung (vgl. Firmenschrift der Firma HILMA-RÖMHELD GMBH, D-57260 Hilchenbach (Germany) "Technische Daten/Zubehör, Doppelspannsystem DS 125" 4.3660, Seite 1, Ausgabe 3/96 und DE 39 25 718 A1) sind in dem Grundkörper zwei Schlitten gegenläufig verschiebbar gelagert. im mittleren Bereich des Grundkörpers ist eine mittelere Spannbacke montiert, damit gleichzeitig zwei Werkstücke gespannt werden können. Da bei derartigen Spannvorrichtungen der maximale Hub des oder der Schlitten häufig kleiner ist als 80 mm, weist der Schlitten an seiner Oberseite mehrere Quernuten auf, die beispielsweise mit einem Mittenabstand (= Teilung) von 40 mm angeordnet sind. Der Spannbacken weist einen in die Quernut passenden Quervorsprung auf und wird mit mehreren Befestigungsschrauben, welche in die Gewindebohrungen des Schlittens eingreifen, mit diesem verbunden. Zur Anpassung an verschiedene Werkstückdimensionen kann der Spannbacken durch Lösen der Befestigungsschrauben vom Schlitten abgenommen und mit seinem Quervorsprung in eine andere Quernut des Schlittens eingesetzt werden. Nachteilig ist jedoch, daß die nicht benutzten Fixierausnehmungen (Quernuten) und Gewindebohrungen dann freiliegen. In diese Vertiefungen können Späne und Kühlschmiermittel eindringen, die nur mit größerem Zeitaufwand und schwierig zu entfernen sind. Die Späne und das Kühlschmiermittel können aus den Vertiefungen meist nur mit Preßluft entfernt werden, wobei jedoch Späne und Kühlmittel in die verschiedensten Richtungen geblasen werden und sich an anderen, bereits zuvor gereinigten Stellen wieder absetzen können. Auch besteht die Gefahr, daß Späne und Kühlschmiermittel zu der Bedienungsperson zurückgeschleudert werden, was zu Gesichtsverletzungen führen kann.

Zu den im vorhergehenden Absatz genannten Konstruktionen, bei denen nur der an den Schlitten angrenzende Raum des Grundkörpers vor Spänen geschützt ist, gehört auch die aus der US-PS 5 634 253 bekannte Spannvorrichtung. Bei dieser bekannten Spannvorrichtung weist der Grundkörper ebenfalls einen U-förmigen Querschnitt und zwei im Grundkörper verschiebbare Schlitten auf. Zwischen den U-Schenkeln ist eine Schraubspindel angeordnet. Um das Eindringen von Spänen in den Raum zwischen den U-Schenkeln des Grundkärpers zu verhindern, ist auf der Oberseite des Grundkörpers eine Abdeckplatte angeordnet. Bei einem Ausführungsbeispiel (Figur 16 - 18) weist diese Abdeckplatte eine rechteckige Ausnehmung auf. In den Längsrändern dieser Ausnehmung sind Nuten vorgesehen, in welchen zwei sich gegenseitig überlappende Abdeckbleche in Verschieberichtung der Schlitten verschiebbar sind. Jedes dieser Abdeckbleche ist mit einem der Schlitten verbunden, so daß es sich mit dem zugehörigen Schlitten bewegt und den Raum zwischen den U-Schenkeln um jede Schlittenstellung vor dem Eindringen von Spänen schützt. Bei dieser bekannten Spannvorrichtung sind jedoch an keinem der beiden Schlitten mehrere Fixierausnehmungen vorgesehen und die Spannbacken sind auch nicht gegenüber dem zugehörigen Schlitten in Schlittenlängsrichtung umsetzbar, so daß das vorgenannte Problem der Verschmutzung von Fixierausnehmungen überhaupt nicht eintritt. Im übrigen sind die Abdeckplatte und auch die Abdeckbleche nur geeignet, um den Grundkörper vor Spänen zu schützen.

Ähnliches trifft für den aus der US-PS 2 499 124 bekannten Schraubstock zu, bei dem ein Abdeckblech in Längsnuten der U-Schenkel des Grundkörpers verschiebbar geführt ist und den zwischen den U-Schenkeln befindlichen Raum vor Eindringen von Spänen schützt. Auch hier wird das Abdeckblech von dem verschiebbaren Schlitten mitgeschleppt. Die Spannbacke ist gegenüber dem Schlitten nicht umsetzbar.

Letzteres trifft auch für die aus der EP 0 526 432 A1 bekannte Spannvorrichtung zu, bei welcher die verschiebbare Spannbacke und der Schlitten eine Einheit bilden. Bei dieser Spannvorrichtung ist die Schraubspindel in einer Hülse gelagert, welche einen Flansch aufweist. Der Flansch kann wahlweise zur Grobverstellung der Hülse mit verschiedenen Ausnehmungen in Eingriff gebracht werden, die in den U-Schenkeln des im Querschnitt U-förmigen Grundkörpers vorgesehen sind. In den Raum zwischen den U-Schenkeln sind Füllstücke aus Nylon einsetzbar, die das Eindringen von Spänen in vorgenannten Raum verhindern sollen. Die Füllstücke können jedoch nicht das Eindringen von Spänen in die vorerwähnten Ausnehmungen verhindern.

Abdeckungen verschiedenster Bauart, wie z.B. Teleskop-Stahlabdeckungen, Rolloabdeckungen und Faltenbälge sind aus dem Prospekt "Führungsbahnschutz, Spindelschutz, Unfallschutz" der Firma Fipa GmbH Industrie-Ausrüstungen, Ismaning, eingegangen 2/1997, S. 3 bis 7 sowie 20 und 21, bekannt.

Der Erfindung liegt daher die Aufgabe zugrunde, eine Spannvorrichtung, insbesondere einen Maschinenschraubstock, der eingangs erwähnten Art so auszubilden, daß die jeweils nicht benutzten Fixierausnehmungen und Gewindebohrungen in einfacher Weise vor dem Eindringen von Spänen, Kühlschmiermittel und sonstigen Verunreinigungen geschützt werden können.

Dies wird nach der Erfindung dadurch erreicht, daß an der Oberseite des Schlittens mindestens ein die jeweils nicht benutzten Fixierausnehmungen überdeckendes Abdeckblech vorgesehen ist, welches am Schlitten in dessen Längsrichtung verschiebbar geführt ist und eine Länge aufweist, die dem Mittenabstand (t) benachbarter Fixierausnehmungen entspricht, wobei die Anzahl der Abdeckbleche der Anzahl der Mittenabstände entspricht und das bzw. die Abdeckblech(e) über den Bereich jeweils nicht benutzter Fixierausnehmungen und Gewindebohrungen verschiebbar ist bzw. sind.

Wenn an einem Schlitten z.B. drei Fixierausnehmungen in Längsrichtung des Schlittens nebeneinander angeordnet sind, dann ergeben sich zwischen diesen drei Fixierausnehmungen zwei Mittenabstände oder Teilungen. Dementsprechend sind an einem solchen Schlitten zwei Abdeckbleche vorgesehen. Wird die Spannbacke mit ihrem Fixiervorsprung bzw. ihrer Querleiste in die mittlere Fixierausnehmung bzw. Quernut eingesetzt, dann wird vorher das eine Abdeckblech zu dem einen Ende des Schlittens hin und das andere Abdeckblech zum anderen Ende des Schlittens hin verschoben. Jedes der beiden Abdeckbleche deckt dann die dort befindliche Fixierausnehmungen und die Gewindebohrungen zu. Späne bleiben auf den Abdeckblechen liegen und können nach Beendigung des Bearbeitungsvorganges leicht von Hand weggewischt werden. Auch das Eindringen von Kühlschmiermittel in die Fixierausnehmungen und Gewindelöcher wird weitgehend verhindert. Selbst wenn Kühlschmiermittel in diese Vertiefungen eindringt, spielt dies keine Rolle, denn das Kühlschmiermittel ist dann nicht mit Spänen vermischt. Die Späne können auch mit Preßluft von den glatten Abdeckblechen abgeblasen werden. Da keine Kanten und Vertiefungen vorhanden sind und die Preßluft auch nicht zu den von den Abdeckblechen abgeteckten Fixierausnehmungen und Gewindelöchern gelangen kann, besteht auch keine Gefahr, daß Späne und Kühlschmiermittel in unkontrollierter Weise durch den Raum oder zur Bedienungsperson zurückspritzen. Der Raum zwischen den Spannbacken kann bei jedem Werkstückwechsel leicht und zeitsparend gereinigt werden. Durch einfaches Sauberhalten der Werkstückunterlagen ergibt sich ein geringeres Ausschußrisiko. Da die Abdeckbleche an dem Schlitten geführt sind, können sie weder beim Umsetzen der Spannbacke noch bei der Demontage des Schlittens vom Grundkörper verlorengehen. Die Anordnung der Abdeckbleche auf der Oberseite des Schlittens, die tiefer liegt als die Werkstückauflagefläche, hat außerdem den Vorteil, daß die Abdeckbleche vertieft angeordnet sind und beim Einsetzen und Herausnehmen von Werkstücken in bzw. aus der Spannvorrichtung nicht beschädigt werden können.

Vorteilhafte Ausgestaltungen der Erfindung sind in den Unteransprüchen gekennzeichnet.

Die Erfindung wird in folgendem, anhand eines in der Zeichnung dargestellten Ausführungsbeispieles näher erläutert. Es zeigen:

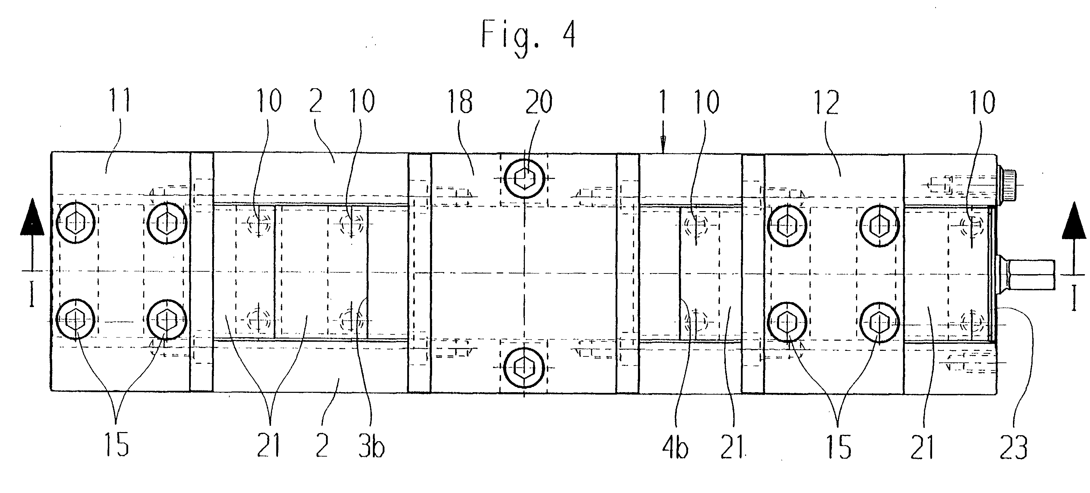

- Figur 1: einen Längsschnitt der Spannvorrichtung nach der Linie I-I der Figur 4,
- Figur 1a: die linke Hälfte dieses Längsschnittes in einem größeren Maßstab,
- Figur 1b: die rechte Hälfte dieses Längsschnittes in einem größeren Maßstab,
- Figur 2: einen Querschnitt der Spannvorrichtung nach der Linie II-II der Figur 1a,
- Figur 3: eine Stirnansicht der Spannvorrichtung in Richtung III der Figur 1b,
- Figur 4: eine Draufsicht der Spannvorrichtung.

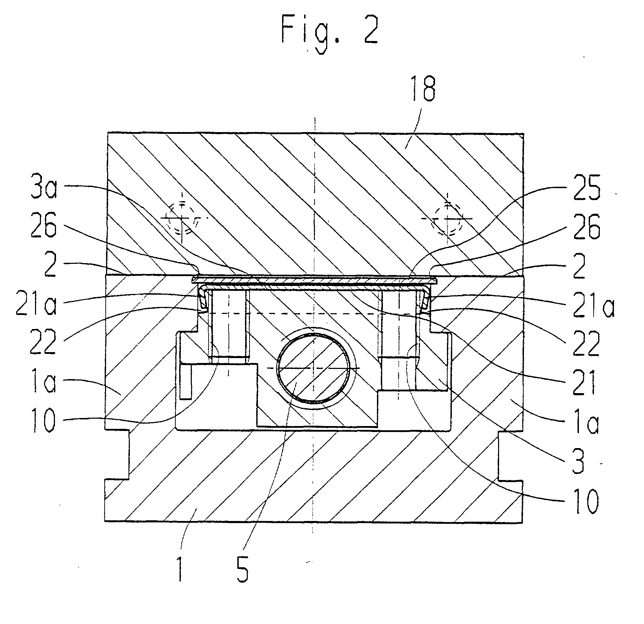

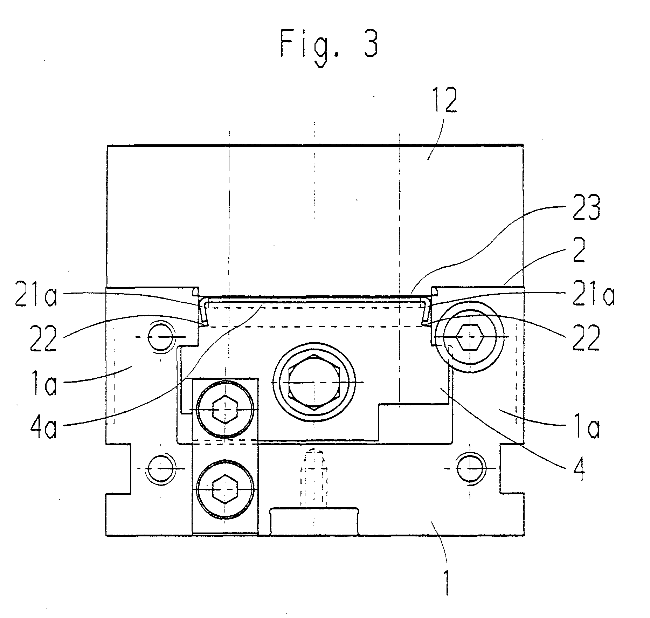

In der Zeichnung ist die Erfindung anhand eines sogenannten Doppelspanners erläutert, mit dem gleichzeitig zwei Werkstücke oder nach Wegnahme der mittleren Soannbacke auch ein großes Werkstück gespannt werden können. Der Grundkörper 1 weist einen im wesentlichen U-förmigen Querschnitt auf, wie insbesondere aus Figur 2 zu entnehmen ist. Die nach oben ragenden U-Schenkel 1a des Grundkörpers haben an ihrem oberen Ende jeweils eine Auflagefläche 2 für das Werkstück. In dem Grundkörper sind zwei Schlitten 3, 4 in Längsrichtung derselben verschiebbar geführt. Der Antrieb dieser Schlitten erfolgt durch eine Schraubspindel 5, deren Gewinde 5a, 5b entgegengesetzte Steigungen aufweisen. Die Gewinde 5a, 5b greifen in entsprechende Muttergewinde 6, 7 der Schlitten 3 bzw. 4 ein. Die Oberseite 3a, 4a jedes der beiden Schlitten ist gegenüber den Auflageflächen 2 des Grundkörpers 1 nach unten versetzt angeordnet, wie insbesondere aus den Figuren 2 und 3 ersichtlich ist.

Jeder der beiden Schlitten 3, 4 weist an der Oberseite jeweils drei Fixierausnehmungen in Form von Quernuten 8a, 8b, 8c bzw. 9a, 9b, 9c auf. Diese Fixierausnehmungen bzw. Quernuten sind in einem gegenseitigen Mittenabstand (= Teilung) t von beispielsweise 40 mm angeordnet. Außerdem ist die Oberseite 3a bzw. 4a mit einer Vielzahl von Gewindebohrungen 10 versehen.

Jedem dieser beiden Schlitten 3, 4 ist eine lösbare Spannbacke 11, 12 zugeordnet. Jede dieser Spannbacken weist einen nach unten vorstehenden Fixiervorsprung 13, 14 in Form einer Querleiste auf. Die Fixiervorsprünge 13, 14 passen in die Fixierausnehmungen 8a - 8c bzw. 9a - 9c. Zur Befestigung jeder Spannbacke 11, 12 am zugehörigen Schlitten 3, 4 sind jeweils vier Befestigungsschrauben 15 vorgesehen, die in die Gewindebohrungen 10 einschraubbar sind. Je nach Werkstückgröße kann die Spannbacke 11 mit ihrem Fixiervorsprung 13 wahlweise entweder in die Fixierausnehmungen 8a, 8b oder 8c eingesetzt und dann mittels der Schrauben 15 mit dem Schlitten 3 verbunden werden. Das gleiche gilt bezüglich der Spannbacke 12.

Bei dem in der Zeichnung dargestellten Doppelspanner weist der Grundkörper 1 außerdem in seinem mittleren Bereich eine Fixiereinrichtung 16, 17 für eine mittlere Spannbacke 18 auf. Die Fixiereinrichtung besteht aus einer in den beiden U-Schenkeln 1a vorgesehenen Quernut 16 und Gewindebohrungen 17. Die mittlere Spannbacke 18 ist im Bereich ihrer beiden Längsseiten jeweils mit einem in die zugehörige Quernut 16 passenden Vorsprung 19 versehen und kann mittels Befestigungsschrauben 20 mit den U-Schenkeln 1a verbunden werden.

An der Oberseite jedes Schlittens 3, 4 sind jeweils zwei Abdeckbleche 21 vorgesehen, welche an den zugehörigen Schlitten 3, 4 in deren Längsrichtung verschiebbar geführt sind. Die Länge 1 jedes dieser Abdeckbleche entspricht dem Mittenabstand (Teilung) t der Fixierausnehmungen 8a - 8 c bzw. 9a - 9c. Die Anzahl der an jedem Schlitten vorgesehenen Abdeckbleche 21 entspricht der Anzahl der Teilungen t. Da bei drei Fixierausnehmungen 8a - 8c zwei Teilungen t vorhanden sind, sind an dem Schlitten 3 zwei Abdeckbleche 21 vorgesehen. Das gleiche gilt bezüglich des Schlittens 4.

Zur verschiebbaren Führung der Abdeckbleche 21 weist jeder Schlitten 3, 4 im oberen Bereich seiner beiden Längsseiten je eine hinterschnittene Längsausnehmung 22 auf. In jede dieser Längsausnehmungen 22 greift jeweils ein nach unten abgewinkelter Randabschnitt 21a des Abdeckbleches 21 verschiebbar ein. Die beiden Längsausnehmungen 22 jedes Schlittens 3, 4 und die Rendabschnitte 21a sind zweckmäßig schwalbenschwanzförmig ausgebildet. Es wäre jedoch auch denkbar, anstelle dieser schwalbenschwanzförmigen Ausgestaltung an den Längsseiten des Schlittens Längsnuten vorzusehen, in welche dann entsprechend nach innen abgekantete Randabschnitte der Abdeckbleche eingreifen. Die Ausgestaltung der Längsausnehmungen und der Randabschnitte soll ein Abheben der Abdeckbleche 21 von den zugehörigen Schlitten 3, 4 verhindern, jedoch eine Längsverschiebung der Abdeckbleche 21 gegenüber dem zugehörigen Schlitten 3, 4 ermöglichen.

Weiterhin ist es zweckmäßig, wenn der Verschiebeweg der Abdeckbleche in beiden Verschieberichtungen durch Anschläge begrenzt ist. Diese Anschläge sind beim gezeigten Ausführungsbeispiel bei dem Schlitten 3 auf der rechten Seite eine Stufe 3b und auf der linken Seite eine Leiste 23. Beim Schlitten 4 befindet sich die Stufe 4b links und die Leiste 23 rechts.

Außerdem sind die Spannbacken 11, 12 an ihren beiden Querseiten im Bereich ihrer Unterseite jeweils mit einer Querausnehmung 24 versehen, in welche der Querrand des angrenzenden Abdeckbleches 21 eingreift. Die Tiefe dieser Querausnehmungen 24 und die Lage der Anschläge 3b, 4b und 23 ist so gewählt, daß bei montierten Spannbacken 11, 12 der gegenseitige Abstand des Grundes der Querausnehmung 24 und der Anschläge 3b, 4b, 23 jeweils der Länge 1 oder einem Vielfachen hiervon entspricht.

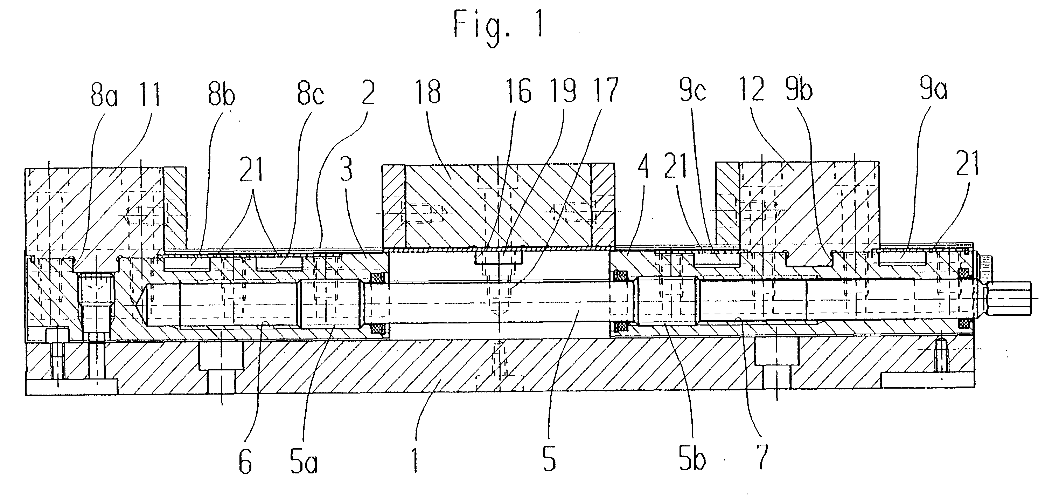

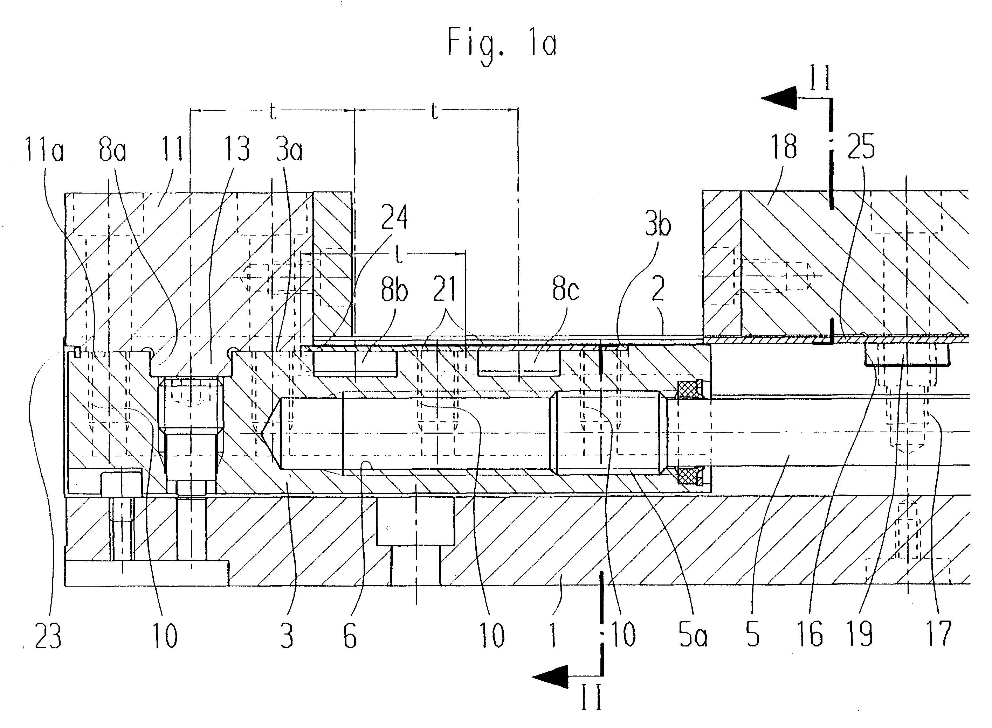

Bevor die jeweilige Spannbacke, z.B. die Spannbacke 11, entsprechend der Größe des jeweiligen Werkstückes mit dem Schlitten 3 verbunden wird, werden die beiden Abdeckbleche 21 in die richtige Lage verschoben. Soll z.B. die Spannbacke 11 so befestigt werden, wie es in Figur 1a dargestellt ist, dann werden beide Abdeckbleche ganz nach rechts verschoben, bis das rechte Abdeckblech 21 an der Stufe 3b und das linke Abdeckblech 21 an dem rechten anliegt. Die Spannbacke 11 wird dann mit ihrer Querleiste 13 in die Quernut 8a eingesetzt. Ihre Unterseite 11a stützt sich direkt auf der Oberseite 3a des Schlittens 3 ab. Das linke Abdeckblech 21 greift mit seinem linken Rand in die Querausnehmung 24 ein, wodurch beide Abdeckbleche 21 nunmehr gegen Längsverschiebung gesichert sind. Die Spannbacke 11 wird dann mit vier Befestigungsschrauben 15 mit dem Schlitten 3 verbunden. Die Abdeckbleche 21 decken die Quernuten 8b und 8c sowie die rechts von der Spannbacke 11 liegenden Gewindebohrungen 10 im Schlitten 3 ab. Auf diese Weise wird ein Eindringen von Verunreinigungen, insbesondere von Spänen, in die Quernuten 8b, 8c und die nicht benutzten Gewindebohrungen 10 verhindert.

Der Schlitten 3 ist so lang ausgebildet, daß er in jeder seiner Spannstellungen unter die mittlere Spannbacke 18 eingreift. Auf diese Weise wird auch verhindert, daß Späne in den von den beiden U-Schenkeln 1a umgrenzten Raum des Grundkörpers 1 eindringen. Das gleiche gilt sinngemäß auch bezüglich des zweiten Schlittens 4.

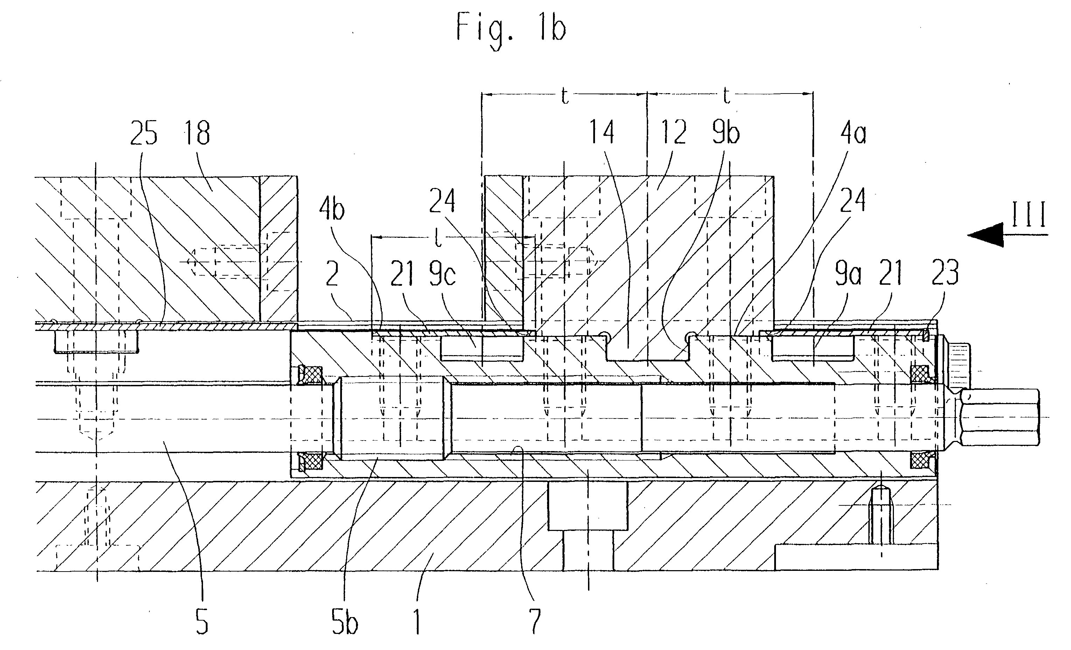

Anhand von Figur 1b kann man sehen, daß beim Eingriff der Querleiste 14 der Spannbacke 12 in die mittlere Quernut 9b eines der Abdeckbleche 21 ganz nach rechts verschoben werden muß, bis es an der Leiste 23 anliegt und das andere Abdeckblech 21 ganz nach links, bis es an der Stufe 4b anliegt. Erst dann kann die Spannbacke 12 mit dem Schlitten 4 verbunden werden.

Die Abdeckbleche 21 werden zweckmäßig aus rostfreiem Stahl hergestellt.

Wenn zum Spannen größerer Werkstücke die mittlere Spannbacke 18 vom Grundkörper 1 entfernt werden muß, würde der unterhalb der Spannbacke 18 liegende Raum des Grundkörpers freiliegen und es könnten dort Späne eindringen. Um auch dies zu verhindern ist im Bereich der Fixiereinrichtung 16, 17 zwischen den nach oben ragenden U-Schenkeln 1a, wie insbesondere aus Figur 2 ersichtlich ist, unterhalb der Ebene der Auflageflächen 2 eine Abdeckplatte 25 vorgesehen. Die Länge dieser Abdeckplatte entspricht in etwa der Länge der mittleren Spannbacke 18. Die Längsränder der Abdeckplatte 25 greifen in Nuten 26 ein, die in den einander zugekehrten Seitenflächen der U-Schenkel 1a eingebracht sind. Wie man weiterhin aus Figur 2 erkennen kann, sind die Abdeckbleche 21 an den Schlitten 3, 4 in einer Ebene unterhalb der Abdeckplatte 25 angeordnet, so daß sie bei entsprechender Weiterverschiebung des jeweiligen Schlittens 3 unter die Abdeckolatte 25 verschoben werden können. Die Nuten 26 kennen hinterschnitten ausgebildet sein, so daß die Abdeckplatte 25 sich nicht ungewollt vom Grundkörper 1 lösen kann.

Die erfindungsgemäße Ausgestaltung kann in gleicher Weise auch bei Spannvorrichtungen, insbesondere Maschinenschraubstöcken, mit nur einem verschiebbaren Schlitten und einer festen Spannbacke angewendet werden.

## Patentansprüche

1. Spannvorrichtung, insbesondere Maschinenschraubstock, mit einem Grundkörper (1), der einen im wesentlichen U-förmigen Querschnitt und am oberen Ende seiner nach oben ragender U-Schenkel (1a) je eine Auflagefläche (2) für ein Werkstück aufweist, mit mindestens einem im Grundkörper (1) verschiebbaren Schlitten (3,4), der mittels einer Schraubspindel (5) verschiebbar ist und der an seiner Oberseite mehrere in Schlittenlängsrichtung mit gegenseitigem Mittenabstand (t) angeordnete Fixierausnehmungen (8a, 8b, 8c ; 9a, 9b, 9c) zum wahlweisen Eingriff von einem entsprechenden Fixiervorsprung (13,14) jeweils einer umsetzbaren Spannbacke (11,12) und mehrere Gewindebohrungen (10) für Befestigungsschrauben der Spannbacke (11,12) aufweist, wobei die Oberseite (3a,3b) des Schlittens (3,4) gegenüber den Auflageflächen (2) des Grundkörpers (1) nach unten versetzt angeordnet ist, **dadurch gekennzeichnet, daß** an der Oberseite (3a, 4a) des Schlittens (3, 4) mindestens ein die jeweils nicht benutzten Fixierausnehmungen (8a, 8b, 8c ; 9a, 9b, 9c) überdeckendes Abdeckblech (21) vorgesehen ist, welches am Schlitten (3, 4) in dessen Längsrichtung verschiebbar geführt ist und eine Länge (1) aufweist, die dem Mittenabstand (t) benachbarter Fixierausnehmungen (8a, 8b, 8c ; 9a, 9b, 9c) entspricht, wobei die Anzahl der Abdeckbleche (21) der Anzahl der Mittenabstände (t) entspricht und das bzw. die Abdeckblech/e (21) über den Bereich jeweils nicht benutzter Fixierausnehmungen und Gewindebohrungen (10) verschiebbar ist/sind.

2. Spannvorrichtung nach Anspruch 1, **dadurch gekennzeichnet, daß** der Verschiebeweg des mindestens einen Abdeckbleches (21) in beiden Verschieberichtungen durch Anschläge (3b, 4b, 23) begrenzt ist.

3. Spannvorrichtung nach Anspruch 1 oder 2, **dadurch gekennzeichnet, daß** der Schlitten (3, 4) im oberen Bereich seiner beiden Längsseiten je eine hinterschnittene Längsausnehmung (22) aufweist, in welche jeweils ein nach unten abgewinkelter Randabschnitt (21a) des mindestens einen Abdeckbleches (21) verschiebbar eingreift.

4. Spannvorrichtung nach Anspruch 3, **dadurch gekennzeichnet, daß** die beiden Längsausnehmungen (22) und die Randabschnitte (21a) schwalbenschwanzförmig ausgebildet sind.

5. Spannvorrichtung nach einem der Ansprüche 1 bis 4, **dadurch gekennzeichnet, daß** das mindestens eine Abdeckblech (21) aus rostfreiem Stahl besteht.

6. Spannvorrichtung nach einem der Ansprüche 1 bis 5, **dadurch gekennzeichnet, daß** die umsetzbare(n) Spannbacke(n) (11, 12) an ihren beiden Querseiten im Bereich ihrer Unterseite je eine Querausnehmung (24) aufweist, in welche der Querrand des angrenzenden Abdeckbleches (21) eingreift.

7. Spannvorrichtung nach einem der Ansprüche 1 bis 6, **dadurch gekennzeichnet, daß** der mindestens eine Schlitten (3, 4) so lang ausgebildet ist, daß er in jeder seiner Spannstellungen eine weitere Spannbacke (18) untergreift, die der mit dem Schlitten (3, 4) verbundenen Spannbacke (11, 12) gegenübersteht.

8. Spannvorrichtung nach einem der Ansprüche 1 bis 7, **dadurch gekennzeichnet, daß** in dem Grundkörper (1) zwei gegenläufig verschiebbare Schlitten (3, 4) vorgesehen sind und im mittleren Bereich des Grundkörpers (1) eine Fixiereinrichtung (16, 17) für eine abnehmbare mittlere Spannbacke (18) angeordnet ist, **daß** im Bereich der Fixiereinrichtung (16, 17) zwischen den nach oben ragenden U-Schenkeln (1a) des Grundkörpers (1) eine Abdeckplatte (25) unterhalb der Ebene der Auflageflächen (2) vorgesehen ist, deren Länge etwa der Länge der mittleren Spannbacke (18) entspricht und deren Längsränder in Nuten (26) eingreifen, die in den einander zugekehrten Seitenflächen der U-Schenkel (1a) eingebracht sind, und **daß** die Abdeckbleche (21) an den Schlitten (3, 4) in einer Ebene unterhalb der Abdeckplatte (25) angeordnet sind.

## Claims

1. Chucking device, in particular machine vice, with a base body (1) which has an essentially U-shaped cross-section and at the upper end of its upwardly projecting U-limbs (1a) exhibits a supporting surface (2) for a workpiece, with at least one slide (3, 4) displaceable in the base body (1), which slide is displaceable by means of a threaded spindle (5) and on its upper side exhibits a plurality of fixing recesses (8a, 8b, 8c; 9a, 9b, 9c) disposed with a mutual centre spacing (t) in the longitudinal direction of the slide for optional engagement of a corresponding fixing projection (13, 14) of a reversible clamping jaw (11, 12) and a plurality of threaded bores (10) for fastening screws of the clamping jaw (11, 12), whereby the upper side (3a, 3b) of the slide (3, 4) is arranged offset downwards relative to the supporting surfaces (2) of the base body (1), **characterised in that** on the upper side (3a, 4a) of the slide (3, 4) at least one cover plate (21) is provided which covers the fixing recesses (8a, 8b, 8c; 9a, 9b, 9c) not in use at the time and is guided displaceably on the slide (3, 4) in its longitudinal direction and exhibits a length (1) which corresponds to the centre spacing (t) of neighbouring fixing recesses (8a, 8b, 8c; 9a, 9b, 9c), whereby the number of cover plates (21) corresponds to the number of centre spacing gaps (t) and the cover plate(s) (21) is/are displaceable over the area of fixing recesses and threaded bores (10) not in use at the time.

2. Chucking device according to claim 1, **characterised in that** the displacement of the at least one cover plate (21) is limited in both directions of displacement by stops (3b, 4b, 23).

3. Chucking device according to claim 1 or 2, **characterised in that** in the upper area of its two longitudinal sides the slide (3, 4) in each case exhibits a back cut longitudinal recess (22) in which a downward angled edge portion (21a) of the at least one cover plate (21) engages displaceably.

4. Chucking device according to claim 3, **characterised in that** the two longitudinal recesses (22) and the edge portions (21a) are dovetail-shaped.

5. Chucking device according to one of claims 1 to 4, **characterised in that** the at least one cover plate (21) is made of stainless steel.

6. Chucking device according to one of claims 1 to 5, **characterised in that** on their two transverse sides in the area of their underside the reversible clamping jaw(s) (11, 12) exhibit a transverse recess (24) in which the transverse edge of the adjoining cover plate (21) engages.

7. Chucking device according to one of claims 1 to 6, **characterised in that** the at least one slide (3, 4) is so long that in each of its clamping positions it engages under a further clamping jaw (18) which stands opposite the clamping jaw (11, 12) connected to the slide (3, 4).

8. Chucking device according to one of claims 1 to 7, **characterised in that** two slides (3, 4) displaceable in opposite directions are provided in the base body (1) and in the middle area of the base body (1) there is a fixing device (16, 17) for a detachable middle clamping jaw (18), **in that** in the area of the fixing device (16, 17) between the upward projecting U-limbs (1a) of the base body (1) a cover plate (25) is provided underneath the plane of the supporting surfaces (2) the length of which roughly corresponds to the length of the middle clamping jaw (18) and the longitudinal edges of which engage in slots (26) which are formed in the facing side surfaces of the U-limbs (1a), and **in that** the cover plates (21) are arranged on the slides (3, 4) in a plane underneath the cover plate (25).

## Revendications

1. Dispositif de serrage, notamment étau de machine, comprenant un corps principal (1), qui présente une section transversale essentiellement en forme de U et, à l'extrémité supérieure de chacune de ses branches de U (1a) dressées vers le haut, une surface d'appui (2) respective prévue pour une pièce, au moins un chariot (3, 4), pouvant être déplacé en translation dans le corps principal (1), qui peut être déplacé en translation au moyen d'une barre filetée (5) et qui comporte, sur sa face supérieure, plusieurs évidements d'immobilisation (8a, 8b, 8c ; 9a, 9b, 9c) qui sont disposés, suivant la direction longitudinale du chariot, à une certaine distance mutuelle entre milieux (t) et qui servent à la venue en prise sélective d'une saillie d'immobilisation (13, 14) correspondante d'une mâchoire de serrage (11, 12) respective pouvant être changée de place, et plusieurs perçages filetés (10) prévus pour des vis de fixation de la mâchoire de serrage (11, 12), la face supérieure (3a, 3b) du chariot (3, 4) étant décalée vers le bas vis-à-vis des surfaces d'appui (2) du corps principal (1), **caractérisé en ce que**, sur la face supérieure (3a, 4a) du chariot (3, 4), il est prévu au moins une tôle de recouvrements (21) qui recouvre les évidements d'immobilisation (8a, 8b, 8c ; 9a, 9b, 9c) chaque fois non utilisés et qui est guidée sur le chariot (3, 4) de façon à pouvoir être déplacée en translation suivant la direction longitudinale de celui-ci et a une longueur (1) qui correspond à l'espacement entre milieux (t) d'évidements d'immobilisation (8a, 8b, 8c ; 9a, 9b, 9c) voisins, le nombre des tôles de recouvrements (21) correspondant au nombre des espacements entre milieux (t) et la tôle/les tôles de recouvrement (21) pouvant être déplacées chacune sur la zone des évidements d'immobilisation et perçages filetés (10) respectifs chaque fois non utilisées.

2. Dispositif de serrage suivant la revendication 1, **caractérisé en ce que** la course de déplacement en translation de la ou des tôles de recouvrements (21) est limitée par des butées (3b, 4b, 23) dans les deux sens de déplacement en translation.

3. Dispositif de serrage suivant la revendication 1 ou 2, **caractérisé en ce que** le chariot (3, 4) comporte, dans la zone supérieure de chacune de ses deux faces longitudinales, une partie en retrait longitudinale (22) en contre-dépouille respective dans laquelle s'engage, de façon à pouvoir être déplacé en translation, un segment de bord (21a) respectif, plié vers le bas, de la ou des tôles de recouvrement (21).

4. Dispositif de serrage suivant la revendication 3, **caractérisé en ce que** les deux parties en retrait longitudinales (22) et les segments de bord (21a) sont réalisés en forme de queue-d'aronde.

5. Dispositif de serrage suivant l'une des revendications 1 à 4, **caractérisé en ce que** la ou les tôles de recouvrement (21) sont en acier inoxydable.

6. Dispositif de serrage suivant l'une des revendications 1 à 5, **caractérisé en ce que** la ou chaque mâchoire de serrage (11, 12) pouvant être changée de place comporte, sur chacune de ses deux faces transversales, dans la zone de sa face inférieure, une partie en retrait transversale (24) respective dans laquelle s'engage le bord transversal de la tôle de recouvrement (21) adjacente.

7. Dispositif de serrage suivant l'une des revendications 1 à 6, **caractérisé en ce que** le ou chaque chariot (3, 4) est réalisé suffisamment long pour, dans chacune de ses positions de serrage, venir se placer sous une autre mâchoire de serrage (18) qui fait face à la mâchoire de serrage (11, 12) fixée au chariot (3, 4).

8. Dispositif de serrage suivant l'une des revendications 1 à 7, **caractérisé en ce que** deux chariots (3, 4) pouvant être déplacés en translation dans des sens opposés sont prévus dans le corps principal (1) et qu'il est prévu, disposé dans la zone centrale du corps principal (1), un dispositif d'immobilisation (16, 17) pour une mâchoire de serrage centrale (18) amovible, **en ce que**, dans la zone du dispositif d'immobilisation (16, 17) et entre les branches de U (1a) du corps principal (1) qui se dressent vers le haut, il est prévu, au-dessous du plan des surfaces d'appui (2), une plaque de recouvrement (25) dont la longueur correspond approximativement à la longueur de la mâchoire de serrage centrale (18) et dont les bords longitudinaux s'engagent dans des rainures (26) qui sont ménagées dans les surfaces latérales des branches de U (1a) qui se font face, et **en ce que** les tôles de recouvrement (21) prévues sur les chariots (3, 4) sont disposées dans un plan situé au-dessous de la plaque de recouvrement (25).
